(19) Europäisches Patentamt

European Patent Office

Office européen des brevets

(11) EP 0 871 312 A1

(12) EUROPEAN PATENT APPLICATION

(43) Date of publication:
14.10.1998 Bulletin 1998/42

(51) Int. Cl.⁶: **H04M 1/02**, H04R 1/38, H04M 1/19

(21) Application number: 97105554.6

(22) Date of filing: 03.04.1997

(84) Designated Contracting States:
AT BE CH DE DK ES FI FR GB GR IE IT LI LU MC NL PT SE
Designated Extension States:
AL LT LV RO SI

(71) Applicant:
Pan Communications, Inc.
Tokyo 107 (JP)

(72) Inventors:
• Yamaguchi, Noboru
  Yokohama-shi, Kanagawa-ken (JP)
• Konomi, Masao
  Meguro-ku, Tokyo (JP)

(74) Representative:
Grünecker, Kinkeldey,
Stockmair & Schwanhäusser
Anwaltssozietät
Maximilianstrasse 58
80538 München (DE)

(54) **Two-way voice communication device**

(57) A two-way voice terminal device which prevents the occurrence of howling or echo, avoids such an occurrence that communication becomes difficult due to ambient noise, and does not cause communication to be interrupted. A transmitter/receiver 1 contains a transmitter 2 and a receiver fabricated integrally together, the transmitter 2 and the receiver are so arranged that the distance is not shorter than 7 cm between the sound pick-up port of the transmitter 2 and the center C of a speaker 3 of the receiver, the transmitter 2 has a two-way microphone 2b arranged nearly at the center of the pipe 2a and is stuffed with a sound-absorbing material 2c at both ends of the pipe 2a and has a net 2d at both ends thereof. The direction of the transmitter 2 is adjustable.

*Fig. 1*

(a)          (b)

EP 0 871 312 A1

## Description

BACKGROUND OF THE INVENTION

Field of the Invention

The present invention relates to a two-way voice terminal device of the hands-free type which enables a person to talk over the telephone with his hands free.

Prior Art

In recent years, a two-way voice terminal device which enables a person to talk over the telephone with his hands free, i.e. a hands-free type telephone has been developed and used.

In the hands-free type telephone, when a sound is emitted from a receiver which is used as a speaker, the sound leaks into a microphone which is the transmitter giving rise to the occurrence of feed-back. Therefore, a one-way circuit is incorporated to decrease the sensitivity of the transmitter circuit during the reception and to decrease the sound volume of the receiver circuit during the transmission, thereby to prevent both feed-back and echo during the two-way communication.

According to a conventional two-way voice terminal device, when the ambient noise such as of radio becomes nearly equal to, or exceeds, the voice level of talk, the one-way circuit determines it as the talking state and automatically decreases the sound volume of the receiver circuit. When the two persons talk simultaneously, furthermore, the one-way circuit automatically decreases the sound volume of the transmitter circuit or of the receiver circuit. Therefore, the transmission of talk or the reception of talk is interrupted to disturb communication to a serious degree.

Generally, furthermore, the sound volume of transmission and the sound volume of reception are changed over and adjusted by detecting an average voice level of transmission or an average voice level of reception accompanied, however, by a predetermined change-over delay time causing such an inconvenience that the communication is interrupted during the period of change-over delay time.

The present invention was accomplished in order to eliminate the above-mentioned inconvenience, and provides a two-way voice terminal device which is capable of preventing the occurrence of howling and echo without using the above-mentioned one-way circuit, avoids difficulty in the communication caused by the ambient noise, and prevents the communication from being interrupted.

The present invention is concerned with a two-way voice terminal device comprising a transmitter and a receiver fabricated integrally together, wherein said transmitter and said receiver are so arranged that a distance is not shorter than 7 cm between a sound pick-up port of said transmitter and the center of a speaker of said receiver, said transmitter contains a two-way microphone arranged nearly at the center of a pipe which is stuffed with a sound-absorbing material at both ends of said pipe, or contains two one-way microphones arranged at both ends of said pipe, and wherein the direction of said transmitter is adjustable.

The invention is further concerned with a two-way voice terminal device comprising an earset-type transmitter/receiver having an earphone-type receiver worn in the external ear and a transmitter fabricated integrally with said earphone-type receiver so as to be arranged outside the external ear, a holding portion for holding said earphone-type transmitter/receiver when it has not been worn in the ear, at least one receiver arranged in said holding portion, and a receiver change-over mechanism for selecting either said earphone-type receiver or said receiver, wherein said transmitter contains a two-way microphone arranged nearly at the center of a pipe which is stuffed with a sound-absorbing material at both ends of said pipe, or contains two one-way microphones arranged at both ends of said pipe, and a transmitter/receiver in the container portion is constituted by said transmitter and said receiver.

Here, the receiver change-over mechanism is also capable of changing over the input sensitivity and/or the frequency characteristics of the transmitter, and the holding portion is provided in a portion for placing the transmitter of a handset that is used as a desk-top telephone, or in a portion for placing the transmitter of a portable telephone terminal device, or is provided in a portion of a portable computer.

The receiver in the holding portion is of the speakerphone type, of the handset type having the transmitter which is brought close to the mouth of a person who is talking when the transmitter/receiver in the holding portion is brought into contact with the ear of the person who is talking, or is of the combination type having both a function of the speakerphone type and a function of the handset type.

The receiver change-over mechanism may be controlled by a hold detecting means which detects whether the earphone-type transmitter/receiver has been held in the holding portion or not.

It is desired that a cord take-up mechanism for holding the connection cord of the earphone-type transmitter/receiver is provided in the holding portion, and that the pipe is not shorter than 4 cm.

It is further desired that to the transmitter is connected an ambient noise suppressing circuit which comprises a gain controller which receives an AC output from the transmitter, a band-pass amplifier which permits the passage of AC signals of frequencies of a particular frequency band only from the transmitter, a peak detector for taking out an output corresponding to a peak value of AC output that has passed through the band-pass amplifier, and a peak-holding circuit based on a holding circuit which suppresses the output level of the peak detector from being attenuated for a predetermined period of holding time.

## BRIEF DESCRIPTION OF THE DRAWINGS

Figs. 1a and 1b are side views illustrating a first embodiment of the present invention;
Fig. 2 is a sectional view of a transmitter shown in Fig. 1;
Fig. 3 is a block diagram of a transmitter circuit;
Fig. 4 is a diagram illustrating frequency characteristics of a band-pass amplifier;
Fig. 5 is a diagram of frequency characteristics showing formants of Japanese vowels (utterance);
Fig. 6 is a diagram schematically illustrating a gain controller using an analog multiplier;
Fig. 7 is a diagram of gain characteristics of a gain controller with respect to the amplitude of the transmitter output;
Fig. 8 is a side view illustrating a second embodiment of the present invention;
Fig. 9 is a sectional view illustrating, on an enlarged scale, an earset-type transmitter/receiver shown in Fig. 8;
Fig. 10 is a side view illustrating a third embodiment of the present invention;
Fig. 11 is a front view illustrating a fourth embodiment of the present invention;
Fig. 12 is a side view illustrating a fifth embodiment of the present invention;
Fig. 13 is a side view illustrating a sixth embodiment of the present invention;
Fig. 14 is a block diagram illustrating a receiver change-over mechanism;
Fig. 15 is a block diagram illustrating another receiver change-over mechanism;
Fig. 16 is a block diagram illustrating a receiver change-over mechanism which also changes over the input sensitivity of the transmitter;
Fig. 17 is a block diagram illustrating a receiver change-over mechanism which also changes over the frequency characteristics of the transmitter; and
Fig. 18 is a block diagram illustrating a receiver change-over mechanism which also changes over the input sensitivity and the frequency characteristics of the transmitter.

## DESCRIPTION OF THE PREFERRED EMBODIMENTS

Embodiments of the invention will now be described with reference to the drawings.

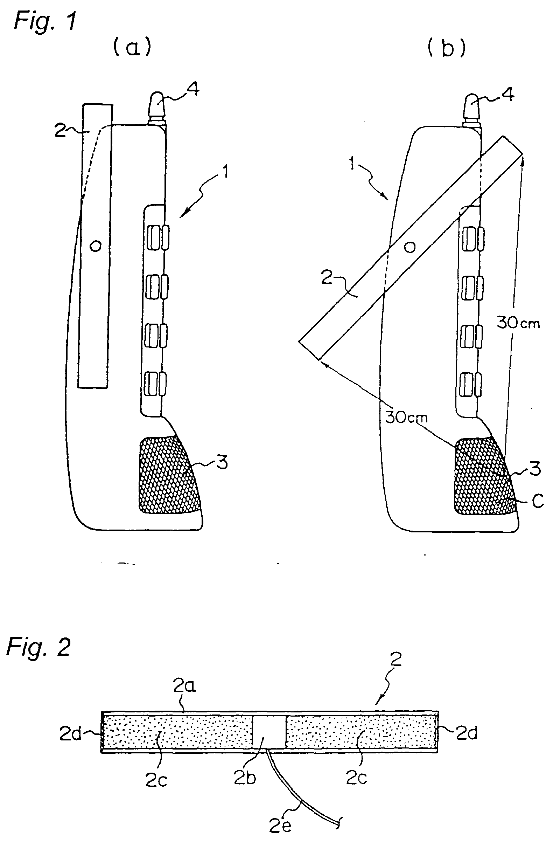

Figs. 1a and 1b are side views illustrating a first embodiment of the present invention, and Fig. 2 is a sectional view of a transmitter shown in Fig. 1.

In these drawings, reference numeral 1 denotes a transmitter/receiver in which a transmitter 2 and a speaker 3 which is a receiver are so arranged that a distance is from 7 cm to 30 cm between the sound pick-up port of the transmitter 2 and the center C of the speaker 3. Reference numeral 4 denotes an antenna.

The transmitter 2 is so supported as to turn about the central portion thereof, so that the direction of the sound pick-up port can be adjusted.

The transmitter 2 is constituted by a pipe 2a having a diameter of 6 mm and a length of not shorter than 4 cm, a two-way microphone 2b of the electret type contained at the center of the pipe 2a, a sound-absorbing material 2c stuffed on both sides of the two-way microphone 2b, and a net 2d attached to both ends of the pipe 2a.

Reference numeral 2e denotes a connection cord connected to the two-way microphone 2b.

Though the transmitter 2 employs a two-way microphone 2b, it is also possible to obtain the same effects as those of the two-way microphone 2b even when one-way microphones are arranged in the pipe 2a at both ends thereof to pick up the voice from the external side and a difference in the output between the two microphones is taken up through an electronic circuit.

Next, described below is a talk by using the transmitter/receiver of the first embodiment.

To talk, first, the transmitter 2 that has been set in a state shown in Fig. 1a is turned as shown in Fig. 1b, so that one sound pick-up port of the transmitter 2 is directed to the mouth of a person who is going to talk.

Here, it is desired that the distances from both sound pick-up ports to the center C of the speaker 3 are equal to each other.

The transmitter 2 is so mounted that both sound pick-up ports of the transmitter 2 in this state are over a range of 7 cm to 30 cm from the center C of the speaker 3.

When both sound pick-up ports of the transmitter 2 are away from the center of the speaker 3 by more than 7 cm, the output of the speaker 3 returns little to the transmitter 2, and howling and echo are prevented from occurring.

The voice of a person who is talking is input through both sound pick-up ports of the transmitter 2, and an output proportional to a difference between the two input voice levels is produced from the transmitter/receiver 1.

To maintain a talking voice level which is large enough as an output of the transmitter 2, it is essential that a difference is very large between the distances from the source of sound to the two sound pick-up ports, since the input voice level varies nearly in reverse proportion to the distance between the sound pick-up port and the source of sound. When the distance is one meter between the mouth of the person who is talking and the center of the pipe, it is desired that the length of the pipe 2a is more than 1/10 thereof if possible, and is more than 1/20 thereof at the shortest. It is further desired that the distance is shorter than one meter in order to increase the output level from the mouth relative to the ambient noise.

When talking in a hands-free state, however, the distance from the transmitter 2 to the mouth is usually not larger than 80 cm. It is therefore desired that the pipe 2a is not shorter than 4 cm.

On the other hand, the sources of ambient noise in most cases are away from the transmitter 2 by more than 2 meters and, hence, the ambient noise enter nearly at the same input level to both sound pick-up ports of the transmitter 2. Accordingly, the ambient noise is offset by each other and is output from the transmitter/receiver 1 as a very low output, i.e., smaller than about 1/3 that of the prior art.

Therefore, the voice of the person who is talking is sent from the transmitter/receiver 1 as an output very larger than the ambient noise, and is clearly transmitted to another person.

Here, the transmitter/receiver 1 converts the voice of the person who is talking as well as ambient noise into electric signals and outputs them.

Moreover, the speaker 3 converts the electric signals transmitted from another person into voice signals by partly adding the electric signals of its own transmitter 2. That is, the person who is talking feels easy when he confirms the voice uttered by him through the speaker 3. For this purpose, the transmission signals are partly added to the reception signals.

In talking in a noisy environment, therefore, it becomes very difficult to listen to another person's talk since the ambient noise from the transmitter of the person who is talking is added to the signals from another person.

Moreover, noise during when the person is talking is transmitted to another person who then may feel very offensive to listen to. Besides, it becomes difficult for the another person to recognize the voice of the person who is talking, and the talk may be hindered.

Therefore, the transmitter 2 is constituted by containing a two-way microphone 2b in a pipe 2a which is longer than 4 cm as shown in Fig. 2. Moreover, the ambient noise suppressing circuit fabricated in the form of an IC is connected to the transmitter 2, and the ratio of the ambient noise level to the voice level from the mouth is increased in order to greatly improve the practical SN ratio for transmitting the talk.

The following two points can be quoted as important assignments for accomplishing the above-mentioned improvement; i.e.,

(1) Voiced section and voiceless section are discriminated and detected easily and faithfully; and
(2) A ratio of transmission gain is large between the voiced section and the voiceless section (section of ambient noise only).

Ii is desired to employ the ambient noise suppressing circuit in order to satisfy the above-mentioned assignments.

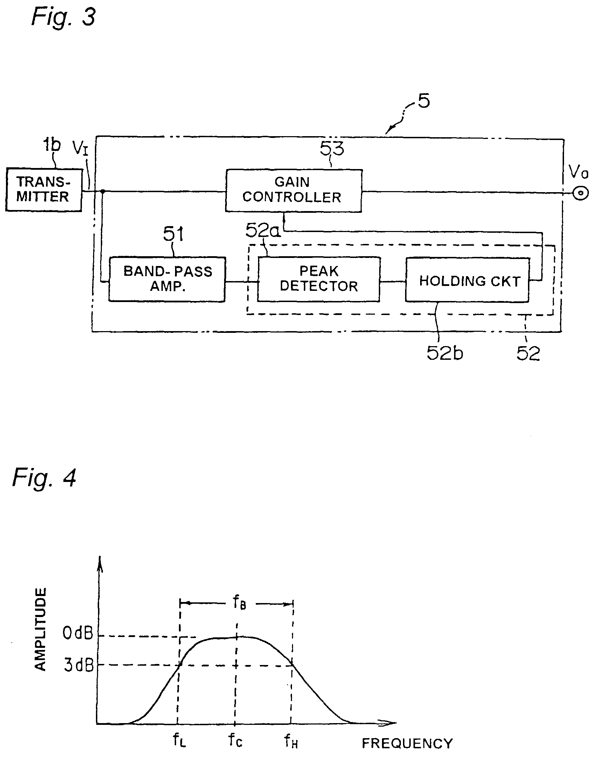

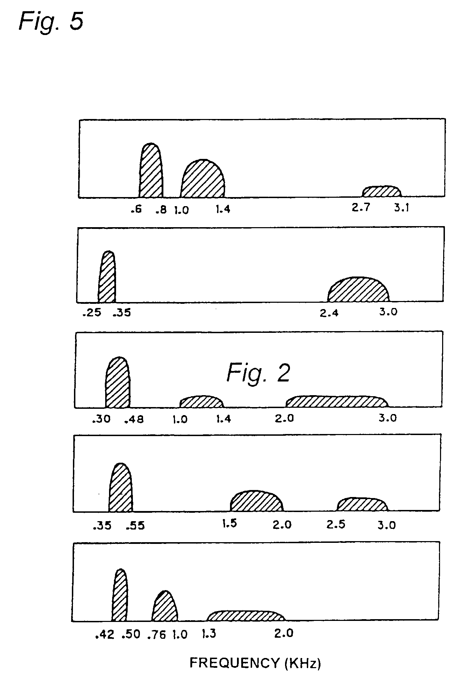

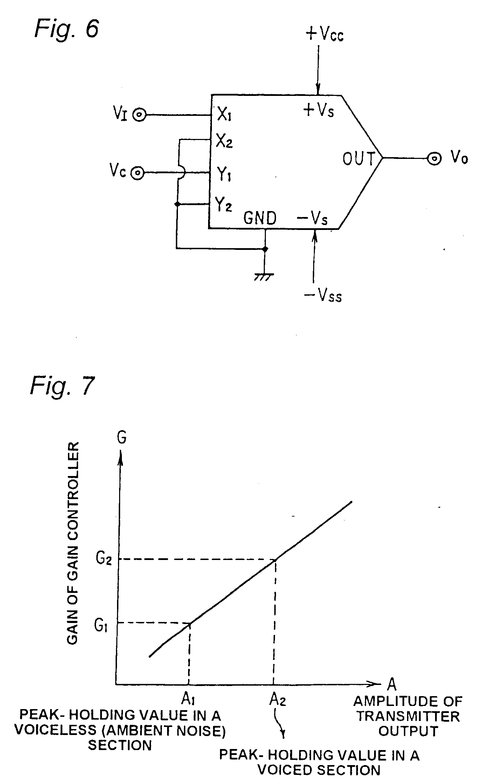

Fig. 3 is a block diagram of a transmitter circuit, Fig. 4 is a diagram illustrating frequency characteristics of a band-pass amplifier, Fig. 5 is a diagram illustrating frequency characteristics of formants of Japanese vowels (utterance), Fig. 6 is a diagram schematically illustrating a gain controller using an analog multiplier, and Fig. 7 is a diagram illustrating gain characteristics of the gain controller with respect to the amplitude of the transmitter output.

In Fig. 3, the same portions as those of Figs. 1 and 2 are denoted by the same reference numerals but their description is not repeated.

In Fig. 5, reference numeral 5 denotes an ambient noise suppressing circuit constituted by a band-pass amplifier for passing the sound of 0.2 to 1 KHz or of 0.2 to 2 KHz, a peak detector 52a for detecting a peak value of sound that has passed through the band-pass amplifier 51, a holding circuit 52b for holding the peak value detected by the peak detector 52a, and a gain controller 53 for controlling the gain from the transmitter 2 relying upon the output from the holding circuit 52b.

A peak-holding circuit 52 is constituted by the peak detector 52a and the holding circuit 52b.

In order to pick up characteristic frequency region of conversation, a band-pass amplifier 51 having characteristics as shown in Fig. 4 is used for discriminating and detecting voiced section and voiceless section, which is the above-mentioned important assignment (1).

This is because, most of the human conversation comprises language voice, and most of the time and energy of language voice is occupied by vowels. As shown in Fig. 5, vowels (Japanese language) are synthetic sounds of specific frequency spectra called first, second and third formants. Among them, the first and second formants occupy most of the energy.

The first formant is distributed over about 0.2 to 1 KHz, and the second formant is distributed over about 0.75 to 2 KHz. Therefore, if the pass band of the band-pass amplifier 51 is set to be 0.2 to 2 KHz, the first and second formants of vowels can be selectively picked up. If the pass band is set to be 0.2 to 1 KHz, the first formant having the greatest energy can be selectively picked up.

The ambient noise contains much components of a low-frequency band (50 to 150 Hz) such as of sound of revolution of cars and electric cars as well as components of a high-frequency band (2 KHz or higher) such as frictional sound. Therefore, the pass band of the band-pass amplifier set to be 0.2 to 2 KHz or 0.2 to 1 KHz is very effective in discriminating and picking up the voice of a conversation.

Next, continuous and smooth control is realized by using a gain controller 53 as means for Varying the transmission gain for the voiced section and the voiceless section without creating the feeling of incompatibility, which is the above-mentioned important assignment (2), the controller being capable of controlling the gain depending upon the peak-holding value output by the band-pass amplifier 51.

As the gain controller 53, there can be suitably used, for example, an analog multiplier circuit shown in Fig. 6 which outputs the multiplied result of a gain control signal and an AC output from the transmitter 2. The output is expressed by,

$$V_0 = K(X_1 - K_2)(Y_1 - Y_2) = K \cdot V_1 \cdot Vc$$

where $V_0$ is a control output, K is a proportional constant, $V_1$ is an AC output of the transmitter, Vc is a gain control signal, and gain G is $K \cdot Vc$.

Since Vc is a peak-holding value (amplitude), the relationship between the amplitude and the output of the gain controller is a proportional relationship as shown in Fig. 7. It is also allowable to use an FET multiplier (utilizing a change in the channel resistance of FET) in place of the above-mentioned analog multiplier.

Next, the time for holding the voiced section may hold the vowels which occupy most of the language voice. By taking into consideration the fact that the lower limit of spectrum of the first formant of a vowel is about 200 Hz, the longest period Tm of the vowel is considered to be about 5 msec. Therefore, the peak-holding circuit 52 may set the holding time Th to hold a peak value of the 5-msec period waveform for a predetermined period of time.

As described above, when the gain control circuit 53 is controlled by the output of the peak-holding circuit 52 for which the holding time Th is set (see Fig. 7), the gain during the talk varies in proportion to the loudness of voice of the person who is talking and, hence, the voice is not interrupted.

Since the peak-holding circuit 52 rises very quickly, a high gain is obtained from the start of conversation, i.e., the sound can be produced in sufficient amounts.

The time Tf until the output of the peak-holding circuit 52 of this embodiment is attenuated by 99%, which can be regarded to be outside the holding range, can be expressed by Tf = 13Th . From this relation, the time Tf is shorter than one second, and this time of attenuation is short enough for the practical conversation. When the talk is finished, therefore, the peak-holding circuit 52 attenuates within a sufficiently short period of time following the peak value of the operation of the voiceless section making it possible to quickly suppress the ambient noise.

When the holding time in the peak-holding circuit 52 is defined to be the time in which the attenuation factor from the peak value is not larger than 30%, this holding time can be set to be 5 to 65 milliseconds when the peak detector 52a is of the type of one-way detection and is set to be 2.5 to 32.5 milliseconds when the peak detector 52a is of the type of two-way detection. This makes it possible to prevent the talk from unnaturally terminating, which stems from a too short holding time, and to prevent the output of talk from staying large for extended periods of time and hence to prevent a drop of the ambient noise suppressing effect, which stems from a too long holding time.

In other words, when the holding time Th is set to be 1 to 13 times as long as the period of 5 milliseconds which is the time corresponds to a minimum frequency (200 Hz) of the first formant of a vowel which is the greatest element of talk energy, the gain after the end of talk can be quickly decreased yet without impairing the transmission of smooth talk, which is practically the best control operation, and the ambient noise can be suppressed to be less than 1/10 of the prior art.

When the peak detector is of the two-way detection type, the peak is detected within one-half period compared to that of the one-way detection type. Therefore, the optimum holding time will be from 1 to 13 times as long as 2.5 milliseconds.

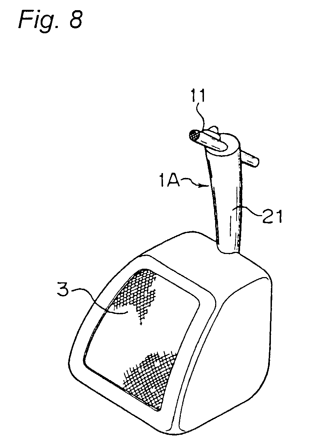

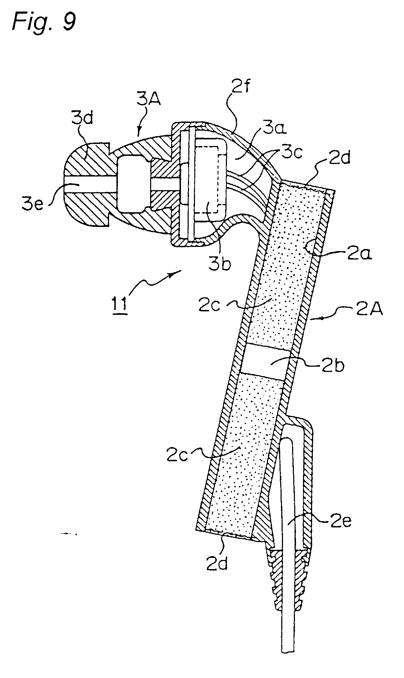

Fig. 8 is a side view illustrating a second embodiment of the present invention for realizing a speakerphone-type transmitter/receiver by placing an earset-type transmitter/receiver on a holding portion. Fig. 9 is a sectional view illustrating, on an enlarged scale, the earset-type transmitter/receiver shown in Fig. 8.

In these drawings, the portions same as, or corresponding to, those of Figs. 1 to 7 are denoted by the same reference numerals but their description is not repeated.

In Fig. 8, reference numeral 1A denotes a transmitter/receiver constituted by an earset-type transmitter/receiver 11, a speaker 3, and a holding plate 21 in which the speaker 3 is mounted and to which the earset-type transmitter/receiver 11 is removably attached.

When the earset-type transmitter/receiver 11 is mounted on a predetermined position of the holding plate 21, the distances from the center C of the speaker 3 to both sound pick-up ports become 7 cm to 30 cm like in the first embodiment, and one sound pick-up port is directed to the mouth of the person who is going to talk.

Referring to Fig. 9, the earset-type transmitter/receiver 11 is constituted by a transmitter 2A and an earphone-type receiver 3A formed integrally with the transmitter 2A.

The transmitter 2A is constituted by a pipe portion of a nearly L-shaped case 2f made of a synthetic resin, a two-way microphone 2b, a sound-absorbing material 2c, a net 2d, and a connection cord 2e.

The connection cord 2e is a bundle of connection cords 3c of the earphone-type receiver 3A, and is contained in a neck portion of the holding plate 21.

The earphone-type receiver 3A is constituted by a hollow chamber 3a formed in the case 2f, a speaker 3b which is a receiver arranged in the hollow chamber 3a, connection cords 3c connected to the speaker 3b, and a swollen member 3d detachably attached to the case 2f.

In the swollen member 3d is formed a sound-emitting hole 3e communicated with the hollow chamber 3a.

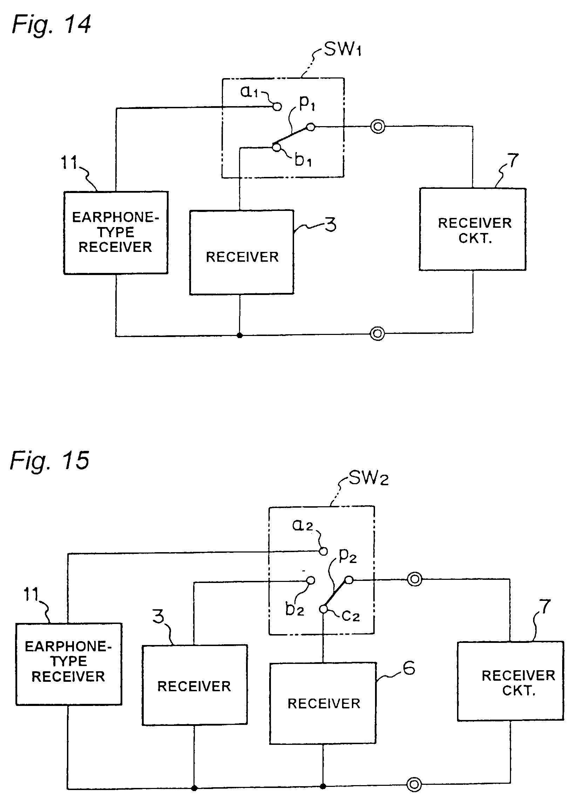

The earphone-type receiver and the speaker 3 which is the receiver arranged in the container portion are changed over by a switch SW1 shown in Fig. 14, and the output of the receiver circuit such as of telephone is changed over to either the earphone-type receiver or the speaker 3 which is the receiver in the holding portion.

Though not diagramed, when the earset-type receiver is placed on a predetermined position of the holding plate 21, the switch SW1 is actuated by, for example, an operation rod to energize the speaker 3 which is the receiver. When the earset-type transmitter/receiver 11 is taken away from the predetermined position of the holding plate 21, the switch SW1 causes the earphone-type speaker to be energized.

Next, described below are the portions different from the first embodiment when a person talks by using the transmitter/receiver of the second embodiment.

First, when the person talks with the earset-type transmitter/receiver 11 being mounted on the holding plate 21, two-way communication of the speakerphone type is accomplished by using the transmitter 2A and the speaker 3.

In this case, the received voice is not output from the speaker 3b of the earphone-type receiver 3A.

When the person talks by taking the earset-type transmitter/receiver 11 off the holding plate 21 and wearing it in his ear, two-way communication of the earset type is accomplished by using the transmitter 2A and the speaker 3b.

In this case, as described above, the switch SW1 is changed over to the earphone-type speaker and no received voice is output from the speaker 3. Therefore, communication is not hindered.

Thus, the second embodiment makes it possible to obtain the effects similar to those of the first embodiment.

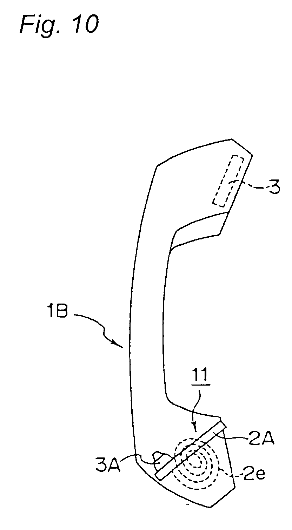

Fig. 10 is a side view illustrating a third embodiment of the present invention, in which the portions same as, or corresponding to, those of Figs. 1 to 10 are denoted by the same reference numerals but their description is not repeated.

In Fig. 10, reference numeral 1B denotes a transmitter/receiver of the handset type and is provided with an earset-type transmitter/receiver 11 and a speaker 3.

When the earset-type transmitter/receiver 11 is mounted on a predetermined position of the transmitter/receiver 1B, distances from the center C of the speaker 3 to both sound pick-up ports become 7 cm to 30 cm like in the first embodiment, and one sound pick-up port is directed to the mouth of the person who talks.

When the earset-type transmitter/receiver 11 is mounted on a predetermined position of the transmitter/receiver 1B, furthermore, the cord take-up mechanism works in the following way. That is, when the connection cord 2e is pulled so that the connection cord 2e is no longer held and is, then, no longer pulled, the connection cord 2e is held. When an operation button is depressed so that the connection cord 2e is no longer held, the connection cord 2e is taken up due to the take-up force.

Next, the transmitter/receiver of a third embodiment will be described concerning those portions different from those of the foregoing embodiments.

First, when the person talks with the earset-type transmitter/receiver 11 being mounted, the communication is accomplished by using the transmitter 2A and the speaker 3.

In this case, the received voice is not output from the speaker 3b of the earphone-type receiver 3A.

The earset-type transmitter/receiver 11 can be taken off and pulled to pull out the connection cord 2e. Then, like in the second embodiment, the communication can be accomplished by using the transmitter 2A and the speaker 3b with the earset-type transmitter/receiver 11 being worn in the ear.

Therefore, the third embodiment makes it possible to obtain the same effects as those of the foregoing embodiments. Besides, the connection cord 2e is taken up by the cord take-up mechanism and causes no disturbance.

When the transmitter 2A is used as the handset-type transmitter near the mouth, the input sensitivity of the transmitter 2A increases by about 5 folds compared with when the transmitter 2A is used as the earset-type transmitter. In this case, therefore, it is desired to decrease the input sensitivity compared to when it is used as the earset-type transmitter as will be described later, in order to prevent saturation in the output of the transmitter 2A and to improve the SN ratio.

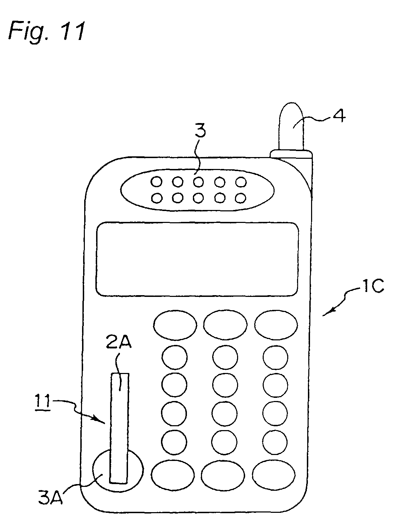

Fig. 11 is a front view illustrating a fourth embodiment of the present invention, wherein the portions same as, or corresponding to, those of Figs. 1 to 10 are denoted by the same reference numerals but their description is not repeated.

In Fig. 11, reference numeral 1C denotes a transmitter/receiver which is a portable telephone terminal device provided with the earset-type transmitter/receiver 11, speaker 3 and antenna 4.

When the earset-type transmitter/receiver 11 is mounted on the predetermined position of the transmitter/receiver 1C, the distances from the center C of the speaker 3 to both sound pick-up ports become 7 cm to 30 cm like in the first embodiment, and one sound pick-up port is directed to the mouth of the person who is going to talk.

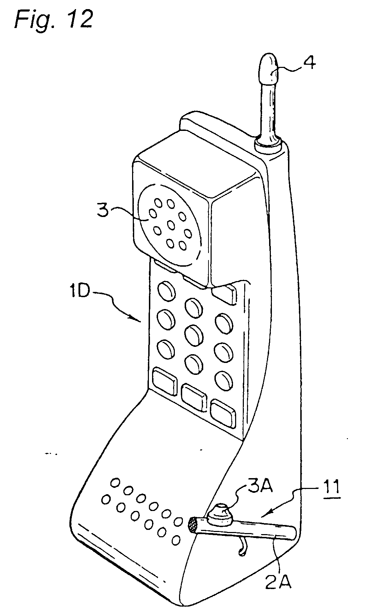

Fig. 12 is a side view illustrating a fifth embodiment of the present invention, wherein the portions same as, or corresponding to, those of Figs. 1 to 12 are denoted by the same reference numerals but their description is not repeated.

In Fig. 12, reference numeral 1D denotes the transmitter/receiver of a cordless telephone terminal device of the type used indoors, which is provided with the earset-type transmitter/receiver 11, speaker 3 and antenna 4.

When the earset-type transmitter/receiver 11 is mounted on the predetermined position of the transmitter/receiver 1D, the distances from the center C of the speaker 3 to both sound pick-up ports become 7 cm to 30 cm like in the first embodiment, and one sound pick-up port is directed to the mouth of the person who is going to talk.

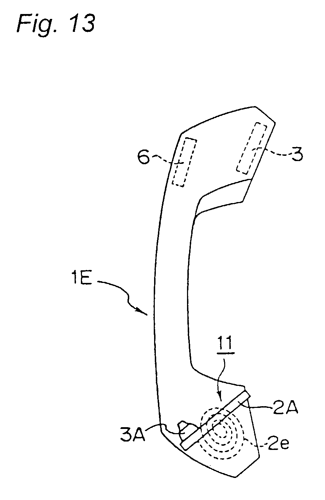

Fig. 13 is a side view illustrating a sixth embodiment of the present invention in which two receivers of the handset type and the speakerphone type are contained in the holding portion. The portions same as, or corresponding to those of Figs. 1 to 12 are denoted by the same reference numerals but their description is not repeated.

In Fig. 13, reference numeral 1E denotes the handset-type transmitter/receiver provided with the earset-type transmitter/receiver 11, and speakers 3, 6. Here, the speaker 3 is of the handset type which is used with the microphone being brought close to the mouth and the speaker being pushed to the ear, and the microphone 6 is the speakerphone-type speaker which emits sound outwardly.

When the earset-type transmitter/receiver 11 is mounted on a predetermined position of the transmitter/receiver 1E, the distances from the center C of the speakers 3, 6 to both sound pick-up ports become 7 cm to 30 cm like in the first embodiment, and one sound pick-up port is directed to the mouth of the person who is going to talk.

The fourth to sixth embodiments make it possible to obtain the same effects as those of the aforementioned embodiments.

In the fourth to sixth embodiments, it is desired to change over the input sensitivity of the transmitter 2A like in the third embodiment in order to prevent saturation in the output of the transmitter 2A and to improve the SN ratio.

The fifth embodiment needs be provided with a receiver change-over mechanism for selecting a receiver as will be described later.

Fig. 14 is a block diagram illustrating the receiver change-over mechanism, wherein the portions same as, or corresponding to, those of Figs. 1 to 13 are denoted by the same reference numerals but their description is not repeated.

In Fig. 14, reference numeral 7 denotes a receiver circuit such as of a telephone terminal device and SW1 denotes a switch. When a contact piece p1 is changed over to the contact point a1, the switch SW1 supplies the output of the receiver circuit 7 to the earphone-type receiver 11. When the contact piece p1 is changed over to a contact point b1, the switch SW1 supplies the output of the receiver circuit 7 to the receiver 3.

When the receiver change-over mechanism is used for the third to fifth embodiments, the earphone-type receiver 11 that is placed on, or removed from, the predetermined position of the receiver 1B, 1C or 1D causes the switch SW1 to be changed over, so that the output from the receiver circuit 7 is supplied to the earphone-type receiver 11 or the receiver 3. Or, the switch SW1 can be arbitrarily changed over so that the output of the receiver circuit 7 is supplied to the earphone-type receiver 11 or to the receiver 3.

Fig. 15 is a block diagram of another receiver change-over mechanism in the case when the two receivers are arranged in the container portion like in the sixth embodiment, wherein the portions same as, or corresponding to, those of Figs. 1 to 14 are denoted by the same reference numerals but their description is not repeated.

In Fig. 15, symbol SW2 denotes a switch in which the output of the receiver circuit 7 is supplied to the earphone-type receiver 11 when a contact piece p2 is changed over to a contact point a2, the output of the receiver circuit 7 is supplied to the receiver 3 when the contact piece p2 is changed over to a contact point b2, and the output of the receiver circuit 7 is supplied to the receiver 6 when the contact piece p2 is changed over to a contact point c2.

When this receiver change-over mechanism is utilized for the sixth embodiment, the switch SW2 can be arbitrarily changed over so that the output of the receiver circuit 7 is supplied to the earphone-type receiver 11 or the receiver 3.

The switches SW1, SW2 may be mechanical switches or electronic switches (analog switches utilizing a CMOS transistor, etc.)

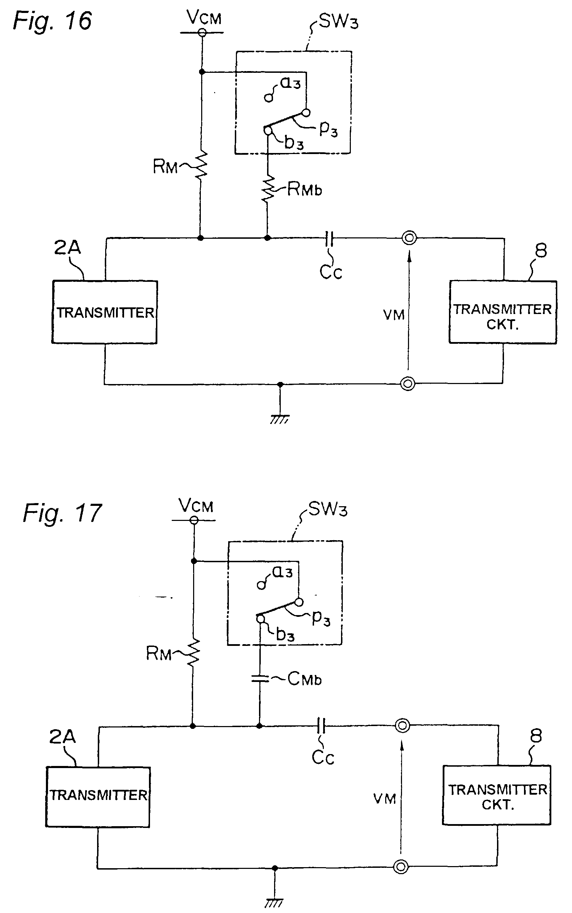

Fig. 16 is a block diagram illustrating the circuit of a receiver change-over mechanism which also changes over the input sensitivity of the transmitter, wherein the portions same as, or corresponding to, those of Figs. 1 to 15 are denoted by the same reference numerals but their description is not repeated.

In Fig. 16, reference numeral 8 denotes a transmitter circuit, and SW3 denotes a switch interlocked to the switch SW1 or SW2. When the switch SW1 or SW2 is changed over to the earphone-type receiver 11, a contact piece p3 in the switch SW3 is changed over to a contact a3. When the switch SW1 or SW2 is changed over to the receiver 3 or to the receiver 6, the contact piece p3 is changed over to a point b3.

Symbol $V_{CM}$ denotes a power source voltage for the transmitter, $R_M$ and $R_{Mb}$ denote resistors for adjusting the output, $C_C$ denotes a capacitor for cutting a direct current, and $V_M$ denotes an output voltage of the transmitter. The power source voltage $V_{CM}$ for the transmitter will be +2 V to +7 V, the resistance $R_M$ will be 1 KΩ to 10 KΩ, the resistance $R_{Mb}$ will be one-forth the resistance $R_M$, and the capacitance $C_C$ will be 0.1 μF to 1 μF.

When the transmitter 2A is used near the mouth as the handset-type transmitter, the input sensitivity of the transmitter 2A becomes 5 times as great as that of when the transmitter 2A is used as the earset-type one. Therefore, the receiver change-over mechanism changes over the input sensitivity to one-fifth that of when the transmitter 2A is used as the earset-type transmitter, in order to prevent saturation in the output of the transmitter 2A and to improve the SN ratio.

Fig. 17 is a block diagram illustrating the circuit of a receiver change-over mechanism which also changes over the frequency characteristics of the transmitter, and wherein the portions same as, or corresponding to, those of Figs. 1 to 16 are denoted by the same reference numerals but their description is not repeated.

In Fig. 17, symbol $C_{Mb}$ denotes a capacitor for lowering the pass frequency band.

With the capacitor $C_{Mb}$ being provided, when the contact piece p3 is changed over to the contact point b3, a high cut-off frequency $f_{HC}$ is expressed as,

$$f_{HC} = 1/2\pi C_{Mb} \cdot R_M$$

When the transmitter 2A is used as the earset-type one, the frequency characteristics decrease on the high frequency side due to the high frequency absorbing action of the skin of the face. When the transmitter 2A is used as the handset-type one in which the transmitter 2A is remote from the skin, therefore, the receiver change-over mechanism works to lower the frequency characteristics of the transmitter on the high frequency side to correct high frequency characteristics in order to prevent howling and to homogenize the sound quality.

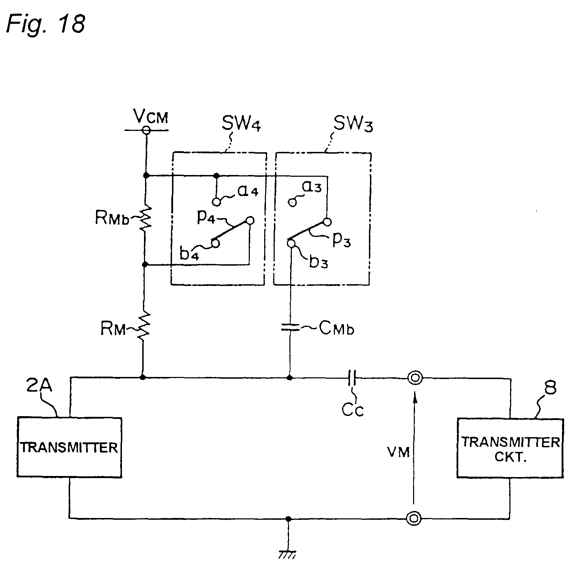

Fig. 18 is a block diagram illustrating the circuit of a receiver change-over mechanism which also changes over the input sensitivity as well as the frequency characteristics of the transmitter, and wherein the portions same as, or corresponding to, those of Figs. 1 to 17 are denoted by the same reference numerals but their description is not repeated.

In Fig. 18, symbol SW4 denotes a switch interlocked to the switch SW3 as well as to the switch SW1 or SW2. When the switch SW1 or SW2 is changed over to the earphone-type receiver 11, a contact piece p4 is changed over to a contact point a4. When the switch SW1 or SW2 is changed over to the receiver 3 or to the receiver 6, the contact piece p4 is changed over to a contact point b4.

Use of this receiver change-over mechanism makes it possible to prevent saturation in the output of the transmitter 2A, to improve the SN ratio, to prevent howling and to homogenize the sound quality.

In the above-mentioned embodiments, those which are provided with none of the receiver change-over mechanism, hold detecting means for detecting whether the earphone-type transmitter/receiver 3A is held in the holding portion or not, and cord take-up mechanism, may be suitably provided with them to accomplish the desired object.

Furthermore, a portable computer provided with the holding portion exhibits the same effects and can be used more conveniently.

According to the present invention as described above, the distance between the sound pick-up port of the transmitter and the center of the speaker is not shorter than 7 cm, and a highly sensitive and two-way microphone is arranged in a pipe to constitute the transmitter. Therefore, no voice enters into the transmitter from the receiver, occurrence of howling is avoided, and clear communication is accomplished.

The earset-type transmitter/receiver in which the earphone-type receiver and receiver are fabricated integrally together, which is not worn in the ear, can be held in the holding portion so as to be used as the transmitter/receiver of the holding portion. In this case, the earphone-type receiver or the receiver of the holding portion is selected by the receiver change-over mechanism, enabling the earset-type transmitter/receiver to be used as the transmitter/receiver of the hands-free type or the handset type.

Moreover, the input sensitivity and/or frequency characteristics of the transmitter are changed over by the receiver change-over mechanism making it possible to at least prevent saturation in the output of the transmitter, to improve the SN ratio, to prevent howling or to homogenize the sound quality.

Furthermore, the holding portion is provided in a portion where there will be placed a transmitter of a handset that is used as a desk-top telephone, in a portion where there will be placed a transmitter of a portable telephone terminal device, or in a portion of a portable computer. Besides, the receiver in the holding portion is of the speakerphone type, of the handset type having a transmitter brought close to the mouth of a person who talks when the transmitter/receiver in the holding portion is brought in contact with the ear of the person who talks, or is of the combination type having both a function of the speakerphone type and a function of the handset type.

The receiver change-over mechanism is controlled by a hold detecting means which detects whether the earphone-type transmitter/receiver is held in the holding portion or not. Therefore, there is no need to manipulate the receiver change-over mechanism by hand, featuring good operability.

Since a cord take-up mechanism for holding the connection cord of the earphone-type transmitter/receiver is provided in the holding portion, the connection cord is taken up by the cord take-up mechanism to cause no disturbance.

By selecting the length of the pipe to be not shorter than 4 cm, furthermore, sufficient degree of sensitivity is maintained for inputting voice of a person who talks, and clear communication is realized.

Since an ambient noise suppressing circuit is connected to the transmitter to suppress the ambient noise, clear communication is accomplished even when the ambient noise has a high level.

**Claims**

1.  A two-way voice terminal device comprising a transmitter and a receiver fabricated integrally together, wherein said transmitter and said receiver are so arranged that a distance is not shorter than 7 cm between a sound pick-up port of said transmitter and the center of a speaker of said receiver, said transmitter contains a two-way microphone arranged nearly at the center of a pipe which is stuffed with a sound-absorbing material at both ends of said pipe, or contains two one-way microphones arranged at both ends of said pipe, and wherein the direction of said transmitter is adjustable.

2. A two-way voice terminal device comprising an earset-type transmitter/receiver having an earphone-type receiver worn in the external ear and a transmitter fabricated integrally with said earphone-type receiver so as to be arranged outside the external ear, a holding portion for holding said earphone-type transmitter/receiver when it has not been worn in the ear, at least one receiver arranged in said holding portion, and a receiver change-over mechanism for selecting either said earphone-type receiver or said receiver, wherein said transmitter contains a two-way microphone arranged nearly at the center of a pipe which is stuffed with a sound-absorbing material at both ends of said pipe, or contains two one-way microphones arranged at both ends of said pipe, and a transmitter/receiver in the container portion is constituted by said transmitter and said receiver.

3. A two-way voice terminal device according to claim 2, wherein said receiver change-over mechanism is also capable of changing over the input sensitivity and/or the frequency characteristics of said transmitter.

4. A two-way voice terminal device according to claim 2 or 3, wherein said holding portion is provided in a portion for placing the transmitter of a handset that is used as a desk-top telephone.

5. A two-way voice terminal device according to claim 2 or 3, wherein said holding portion is provided in a portion for placing the transmitter of a portable telephone terminal device.

6. A two-way voice terminal device according to claim 2 or 3, wherein said holding portion is provided in a portion of a portable computer.

7. A two-way voice terminal device according to claim 2 or 3, wherein said receiver in the holding portion is of the speakerphone type, of the handset type having the transmitter which is brought close to the mouth of a person who is talking when the transmitter/receiver in the holding portion is brought into contact with the ear of the person who is talking, or is of the combination type having both a function of the speakerphone type and a function of the handset type.

8. A two-way voice terminal device according to any one of claims 2 to 7, wherein said receiver change-over mechanism is controlled by a hold detecting means which detects whether said earphone-type transmitter/receiver has been held in said holding portion or not.

9. A two-way voice terminal device according to any one of claims 2 to 9, wherein a cord take-up mechanism for holding the connection cord of said earphone-type transmitter/receiver is provided in said holding portion.

10. A two-way voice terminal devise according to any one of claims 1 to 9, wherein said pipe is not shorter than 4 cm.

11. A two-way voice terminal device according to any one of claims 1 to 10, wherein to said transmitter is connected an ambient noise suppressing circuit which comprises a gain controller which receives an AC output from said transmitter, a band-pass amplifier which permits the passage of AC signals of frequencies of a particular frequency band only from said transmitter, a peak detector for taking out an output corresponding to a peak value of AC output that has passed through the band-pass amplifier, and a peak-holding circuit based on a holding circuit which suppresses the output level of the peak detector from being attenuated for a predetermined period of holding time.

*Fig. 1*

(a)

(b)

30cm

30cm

*Fig. 2*

## Fig. 3

## Fig. 4

Fig. 5

Fig. 2

FREQUENCY (KHz)

Fig. 6

V_I ⊙ ── X_1    +V_s     +V_cc
        X_2
V_c ⊙ ── Y_1           OUT ── ⊙ V_o
        Y_2
        GND    −V_s
                      −V_ss

Fig. 7

G

GAIN OF GAIN CONTROLLER

G_2

G_1

A_1        A_2        A
                      AMPLITUDE OF
                      TRANSMITTER
                      OUTPUT

PEAK- HOLDING VALUE IN A
VOICELESS (AMBIENT NOISE)
SECTION

PEAK- HOLDING VALUE IN A
VOICED SECTION

*Fig. 8*

*Fig. 9*

Fig. 10

Fig. 11

*Fig. 12*

*Fig. 13*

Fig. 14

Fig. 15

*Fig. 16*

*Fig. 17*

Fig. 18

European Patent
Office

**EUROPEAN SEARCH REPORT**

Application Number

EP 97 10 5554

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| X<br>A | EP 0 637 187 A (PAN COMMUNICATIONS INC)<br>* column 5, line 55 - column 17, line 12; figures 4-23 * | 1,10<br>2,11 | H04M1/02<br>H04R1/38<br>H04M1/19 |
| A | WO 96 21307 A (WEATHERILL )<br>* page 9, line 5 - page 15, line 2; figures 1-19 * | 2,4-6 | |
| A | WO 94 23520 A (JABRA CORP)<br>* page 9 - page 22; figures 1-15 * | 2-4,6 | |
| A | EP 0 679 044 A (AT & T CORP)<br>* column 4, line 33 - column 9, line 57; figures 1-13 * | 1,2 | |
| A | EP 0 681 410 A (AT & T CORP)<br>* column 3, line 49 - column 8, line 47; figures 1-12 * | 1,2 | |
| A | US 5 555 449 A (KIM )<br>* column 2, line 35 - column 4, line 28; figures 1-5 * | 1 | TECHNICAL FIELDS SEARCHED (Int.Cl.6)<br><br>H04M<br>H04R |

The present search report has been drawn up for all claims

| Place of search | Date of completion of the search | Examiner |
|---|---|---|
| THE HAGUE | 17 September 1997 | Delangue, P |